(19) **Europäisches Patentamt
European Patent Office
Office européen des brevets**

(11) **EP 4 302 855 B1**

(12) **EUROPEAN PATENT SPECIFICATION**

(45) Date of publication and mention
of the grant of the patent:
**13.08.2025  Bulletin 2025/33**

(51) International Patent Classification (IPC):
*B01D 19/00* *(2006.01)*        *B01L 3/00* *(2006.01)*

(21) Application number: **23179245.8**

(22) Date of filing: **14.06.2023**

(52) Cooperative Patent Classification (CPC):
**B01D 19/0036; B01L 3/502723;** B01L 2200/0684;
B01L 2200/146; B01L 2200/16; B01L 2300/0864;
B01L 2300/0883; B01L 2400/0487

(54) **LIQUID FEEDING METHOD AND FLUIDIC DEVICE**

FLÜSSIGKEITSZUFUHRVERFAHREN UND FLUIDISCHE VORRICHTUNG

PROCÉDÉ D'ALIMENTATION EN LIQUIDE ET DISPOSITIF FLUIDIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **08.07.2022  JP 2022110413**

(43) Date of publication of application:
**10.01.2024  Bulletin 2024/02**

(73) Proprietor: **Hitachi, Ltd.**
**Tokyo 100-8280 (JP)**

(72) Inventors:
• **SHIMIZU, Saaya**
**Tokyo, 100-8280 (JP)**

• **IMAI, Ryo**
**Tokyo, 100-8280 (JP)**
• **YANAGAWA, Yoshimitsu**
**Tokyo, 100-8280 (JP)**

(74) Representative: **MERH-IP Matias Erny Reichl
Hoffmann
Patentanwälte PartG mbB
Paul-Heyse-Straße 29
80336 München (DE)**

(56) References cited:
**US-A1- 2007 104 619      US-A1- 2010 053 283
US-A1- 2012 178 091      US-A1- 2016 144 362
US-A1- 2016 193 603      US-A1- 2017 002 399
US-A1- 2019 224 590**

**Description**

CROSS REFERENCE TO RELATED APPLICATIONS

The present application claims priority from Japanese patent application JP 2022-110413 filed on July 8, 2022.

BACKGROUND OF THE INVENTION

1. Field of the Invention

The present invention relates to a liquid feeding method and a fluidic device.

2. Description of the Related Art

In recent years, techniques for performing chemical reactions such as nucleic acid amplification and gene detection in a flow path formed on a small substrate (fluidic device) have been developed. By setting the flow path to a temperature optimum for a chemical reaction by a method such as installing a fluidic device on a heater, and feeding a solution for a chemical reaction to the flow path, a chemical reaction is achieved in the flow path. Examples of performing a chemical reaction in a flow path include nucleic acid amplification by a polymerase chain reaction (PCR) method and gene detection by a microarray method.

In the nucleic acid amplification by PCR, a microtube containing a reaction solution is usually set in a heat block, and the temperature of the heat block is changed to repeat steps (thermal cycle) of denaturation, annealing, and extension of DNA, thereby amplifying target DNA. At this time, the heating and cooling time of the heat block rather than the heating and cooling of the solution is rate-limiting, and the reaction usually takes about 1 hour. On the other hand, there is a method in which a flow path is installed on a plurality of heaters set to temperatures necessary for PCR, and a solution is reciprocated in the flow path to perform PCR. Since the flow path is always set to the desired temperatures, it is known that thermal cycling is achieved only by heating and cooling the solution, and PCR is completed in less than 10 minutes.

In gene detection by a microarray, a specific molecule (probe) chemically reacting with a target substance is fixed on a substrate, and the target substance is detected. Normally, since a solution containing a target molecule is caused to flow over a wide substrate with respect to the area where the probe is fixed, the frequency of contact between the target substance and the probe is low, and gene detection takes several to several tens of hours. On the other hand, a method is known in which a probe is fixed in a narrow flow path and a solution containing a target substance flows therethrough, and therefore, the frequency of contact between the target substance and the probe is increased, and gene detection is completed in only a few minutes.

As another advantage of performing the chemical reaction in the flow path, there is a reduction in reagent usage. Since the chemical reaction is performed in a minute space as compared with a substrate or the like, the amount of reagent liquid to be used can be reduced.

SUMMARY OF THE INVENTION

If bubbles are present in a flow path when the flow path is filled with a reaction solution for a chemical reaction, liquid feeding is hindered, and a decrease in chemical reaction efficiency becomes a problem. For example, when nucleic acid amplification is performed by PCR in the flow path, if bubbles are present in the flow path, the bubbles may block the flow path and prevent liquid feeding for a thermal cycle, or the bubbles may inactivate the nucleic acid amplification enzyme and reduce the reaction efficiency.

As a method for removing bubbles in a flow path, JP 2007-85998 A discloses a method for pressurizing a solution in a flow path. As the pressure applied to the solution is increased, the solubility of the gas in the solution is increased, and the air in the bubbles is dissolved in the solution to remove the bubbles. As disclosed in JP 2007-85998 A, a sub flow path is connected to the downstream side of a main flow path in which a chemical reaction is performed to increase the solution pressure inside the main flow path.

However, in JP 2007-85998 A, liquid feeding in a pressurized state is limited to one direction. For example, when microarray-like gene detection is performed in a flow path, if reciprocating liquid feeding is desirable for the purpose of, for example, increasing the chemical reaction efficiency between a target substance and a probe, this method cannot be applied. In the method described in JP 2007-85998 A, when the volume of the sample solution is smaller than the volume of the flow path, pre-fed liquid is required to maintain the pressure of the sample solution. It is considered that the pre-fed liquid affects the chemical reaction such as causing dissociation of the probe.

US 2016/193603 A1 discloses a microfluidic cartridge and methods for performing a diagnostic, molecular or biochemical assay thereon, where all dried and/or liquid reagents necessary for the assay are contained in the cartridge and the assay requires only the addition of sample.

US 2019/224590 A1 discloses a continuous bubble removal method including: preparing a main container, a basic pressurization container that connects to the main container and holds a basic operating liquid, and a basic movable portion that is displaceably attached to the basic pressurization container; flowing target liquid through the main container, the liquid including a bubble; and iteratively decreasing and increasing a volume of the bubble by iteratively pressurizing and depressurizing the target liquid from a region via the basic operating liquid by displacing, in a reciprocating manner, the basic movable portion the region being surrounded by a basic connecting portion of the basic pressurization container that is closer to the main container than the basic supporting portion, wherein an opening area of the basic supporting portion is larger than an opening area of the basic connecting portion.

US 2017/0002399 A1) describes a fluid cartridge having a body comprising a malleable material and a layer comprising a deformable material.

Therefore, an object of the present invention is to provide a liquid feeding method and a fluidic device, capable of applying pressure necessary for bubble suppression to a solution when the chemical reaction is performed in the flow path, eliminating the need for pre-fed liquid, and applicable to reciprocating liquid feeding.

As a liquid feeding method according to the present invention, there is provided a liquid feeding method for removing bubbles from a solution introduced into a fluidic device, wherein

the fluidic device includes
a flow path of a volume v,
a first chamber having a volume $V_1$ and connected to a first side of the flow path, and/or
a second chamber having a volume $V_2$ and connected to a second side, being different from the first side, of the flow path,
$V_1$, $V_2$, and v satisfy

$$\frac{V_2}{V_1 + v} \geq a \qquad \text{Formula (1)}$$

where

$$a = \frac{\alpha}{\beta} - \frac{\Delta P}{P_0} - 1 \qquad \text{Formula (2)}$$

$\alpha$ is a solubility of gas in the solution at a temperature of the second chamber,
$\beta$ is a solubility of the gas in the solution at a temperature of the flow path,
$P_0$ is a pressure of a surrounding environment of the fluidic device,
$\Delta P$ is a bubble internal pressure rise value, where $\Delta P = 4\sigma/d$, $\sigma$ is a surface tension of the solution, and d is a diameter of the flow path, wherein the temperature of the flow path is set higher than the temperature of the second chamber, and the liquid feeding method includes:

disposing the solution at a first position opposite to the flow path with respect to the second chamber; pressurizing and feeding the solution so that the solution is transferred through the second chamber toward the flow path; and/or
pressurizing and introducing the solution from the second chamber into the flow path, wherein the solution is introduced into the fluidic device through a solution introduction portion, and the solution introduction portion is provided at a connection portion between the second chamber and the second side of the flow path. Wherein the fluidic device further includes a solution introduction portion provided at a connection portion between the second chamber and the second side of the flow path; a valve for opening and closing the solution introduction portion; and a valve provided on a side opposite to the flow path with respect to the first chamber, and the liquid feeding method further comprising, before the disposing: introducing the solution into the fluidic device at the solution introduction portion; closing the introduction portion; and moving the solution from the solution introduction portion toward the first position in a state where the valve is opened.

As a fluidic device according to the present invention, there is provided a fluidic device for introducing and pressurizing a solution, including:

a flow path of a volume v;
a first chamber having a volume $V_1$ and connected to a first side of the flow path; and/or
a second chamber having a volume $V_2$ and connected to a second side, being different from the first side, of the flow

path, wherein
$V_1$, $V_2$, and v satisfy

$$\frac{V_2}{V_1+v} \geq a \qquad \text{Formula (1)}$$

where

$$a = \frac{\alpha}{\beta} - \frac{\Delta P}{P_0} - 1 \qquad \text{Formula (2)}$$

$\alpha$ is a solubility of gas in the solution at a temperature of the second chamber,
$\beta$ is a solubility of the gas in the solution at a temperature of the flow path,
$P_0$ is a pressure of a surrounding environment of the fluidic device,
$\Delta P$ is a bubble internal pressure rise value, where $\Delta P = 4\sigma/d$, $\sigma$ is a surface tension of the solution, and d is a diameter of the flow path. The fluidic device further comprising a solution introduction portion provided on a side opposite to the flow path (103) with respect to the second chamber, further comprising a liquid feeder for feeding the solution in the fluidic device, the liquid feeder comprising a pressurizing unit connected to the solution introduction portion, herein the pressurizing unit applies a pressure via the solution introduction portion to feed the solution. The solution introduction portion is provided at a connection portion between the second chamber and the second side of the flow path. Further comprising a heating mechanism for heating the flow path; a valve provided on a side opposite to the flow path with respect to the first chamber; a valve for opening and closing the solution introduction portion; the solution introduction portion is provided at a connection portion between the second chamber and the second side of the flow path.

As an example of the liquid feeder according to a disclosure, there is a liquid feeder for feeding the solution in the fluidic device, the liquid feeder including:

a pressurizing unit connected to the solution introduction portion, wherein
the pressurizing unit applies a pressure via the solution introduction portion to feed the solution.

According to the liquid feeding method, the fluidic device, and the liquid feeder of the present invention, it is possible to apply a pressure necessary for bubble suppression to the solution when a chemical reaction is performed in the flow path. Therefore, inhibition of liquid feeding due to bubbles and a decrease in chemical reaction efficiency are suppressed, and a chemical reaction can be more stably or efficiently performed in the flow path.

In addition, according to the liquid feeding method, the fluidic device, and the liquid feeder of the present invention, it is possible to reciprocate a solution feeding while suppressing bubbles in the flow path. Furthermore, even when the solution amount is smaller than the volume of the flow path, bubbles can be suppressed while eliminating the need for a pre-fed liquid.

Problems, configurations, and effects other than those described above will be clarified by the following description of embodiments.

BRIEF DESCRIPTION OF THE DRAWINGS

Fig. 1 is a device configuration diagram of a first embodiment;

Fig. 2 is a device cross-sectional view of the first embodiment;

Fig. 3 is a work flow of the first embodiment;

Fig. 4 is a schematic view of a fluidic device in step (a) of Fig. 3;

Fig. 5 is a schematic view of a fluidic device in step (d) of Fig. 3;

Fig. 6 is a device configuration diagram of a second embodiment;

Fig. 7 is a device cross-sectional view of the second embodiment and a modification;

Fig. 8 is a work flow of a second embodiment;

Fig. 9 is a schematic view of a fluidic device in step (b) of Fig. 8;

Fig. 10 is a schematic view of a fluidic device in step (f) of Fig. 8;

Fig. 11 is a device configuration diagram of a third embodiment;

Fig. 12 is a device cross-sectional view of the third embodiment;

Fig. 13 is a work flow of third embodiment;

Fig. 14 is a device configuration diagram of a

fourth embodiment; and

Fig. 15 is a graph illustrating a relationship between a chamber volume ratio and a bubble occurrence probability.

DESCRIPTION OF THE PREFERRED EMBODIMENTS

Hereinafter, embodiments of the present invention will be described with reference to the drawings.

First Embodiment

Hereinafter, a fluidic device according to a first embodiment of the present invention will be described. The fluidic device is for performing nucleic acid amplification by PCR, gene detection by a microarray method, or the like, and is particularly configured to introduce a solution and pressurize the introduced solution to move.

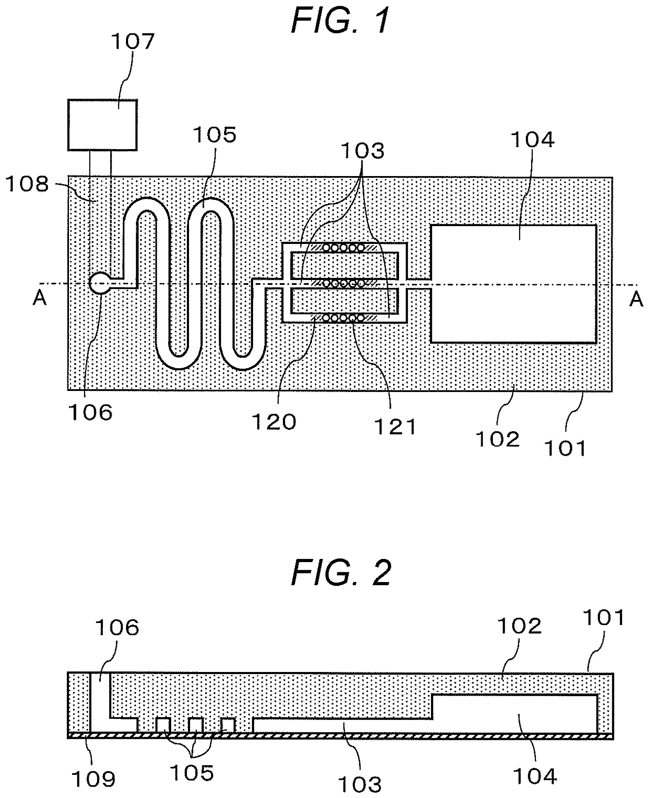

Fig. 1 illustrates a plan view of a fluidic device 101, and Fig. 2 illustrates a cross-sectional view taken along line A-A of Fig. 1. The fluidic device 101 includes a substrate 102 and a sealing material 109.
The substrate 102 is preferably formed of a material that is stable in temperature change and pressure change, is hardly attacked by a solution used for a chemical reaction, and has good moldability. As such a material, for example, a cycloolefin polymer (COP), polycarbonate (PC), and an acrylic resin (PMMA) are suitable.
The substrate 102 is provided with a flow path 103, a first chamber 104, a second chamber 105, and a solution introduction portion 106. The first chamber 104 is connected to one side (first side) of the flow path 103. The second chamber 105 is connected to the other side (second side different from the first side) of the flow path 103.
The solution introduction portion 106 is processed as a through hole on the substrate 102. The solution introduction portion 106 opens at an upper surface of the fluidic device 101 (for example, the surface opposite to the surface to which the sealing material 109 is press-bonded). The flow path 103, the first chamber 104, and the second chamber 105 are formed by cutting the substrate 102 and sealing the substrate with the sealing material 109.
The solution introduction portion 106 is provided on the side opposite to the flow path 103 with respect to the second chamber 105. By providing the solution introduction portion 106 at this position, it is easy to introduce the solution into the second chamber 105 without interfering with the flow path 103.
The flow path 103 is not limited to the linear shape illustrated in Figs. 1 and 2, and may be, for example, a meandering shape. In the example of Fig. 1, the flow path 103 is branched into a plurality of (three) flow paths, but may be one flow path without branching. By branching the flow path 103 into a plurality of flow paths, a flow rate can be increased without increasing the cross-sectional area per path in flow path 103. The cross-sectional shape of the flow path 103 can be designed in any shape, and may be, for example, a square, a rectangle, or a circle.
A specific molecule (probe 120) that chemically reacts with a specific target substance may be fixed to the flow path 103. Examples of the target substance include nucleic acids, antigens, antibodies, and peptides.
One or more beads 121 may be arranged in the flow path 103, and for example, the flow path 103 may be filled with the plurality of beads 121. For example, a specific molecule (probe) chemically reacting with a specific target substance is fixed on the surface of the bead 121.
By using the probe 120 and/or the bead 121, it is possible to detect a specific target substance. It is also possible to omit the probe 120 and/or the bead 121.
The first chamber 104 has a rectangular parallelepiped shape in the example illustrated in Figs. 1 and 2, but may have another shape, for example, a cylindrical shape. The first chamber 104 may have a flow path shape like the second chamber 105 illustrated in Figs. 1 and 2.
The second chamber 105 has a flow path shape in the example illustrated in Figs. 1 and 2, but may have another shape. For example, it may have a rectangular parallelepiped shape like the first chamber 104 as illustrated in Figs. 1 and 2, or may have a cylindrical shape.

The definition of the "flow path shape" can be appropriately determined by those skilled in the art, but for example, it can be said that the flow path shape is a shape having a predetermined axial direction and having no portion in which the cross-sectional shape discontinuously changes (step portion) along the axial direction in the entire region including both axial ends. The "axial direction" does not need to be a linear direction, and may include a curved portion as in the second chamber 105 in Fig. 1. The axial direction can also be referred to as a longitudinal direction or a direction in which the solution moves. In other words, the flow path shape can be said to be a shape in which the cross-sectional shape does not change according to the axial position or the cross-sectional shape changes only continuously. According to such a shape, since there is no portion where the cross-sectional shape discontinuously changes (step portion), the solution does not stay in such a portion, and more appropriate liquid feeding can be performed.

The sealing material 109 has a function of adhering to the substrate 102. The surface of the sealing material 109 in close contact with the substrate 102 may have adhesiveness or pressure sensitivity. The sealing material 109 is preferably a film made of polyolefin (PO), polypropylene (PP), or another resin and having a thickness of about 0.1 mm.

In connection with the fluidic device 101, a pressurization/decompression device 107 is disposed. The pressurization/decompression device 107 is connected to the solution introduction portion 106 of the fluidic device 101 via the tube 108. The pressurization/decompression device 107 is an example of a pressurizing unit, and moves the solution in the fluidic device 101 by pressurization and/or decompression. In this manner, the pressurization/decompression device 107 functions as a liquid feeding control mechanism. As the pressurization/decompression device 107, for example, a syringe pump, a diaphragm pump, a microblower, or the like can be used.

The volume of the flow path 103 is denoted by v, the volume of the first chamber 104 is denoted by $V_1$, and the volume of the second chamber 105 is denoted by $V_2$. $V_1$, $V_2$, and v are designed to satisfy the following.

$$\frac{V_2}{V_1+v} \geq a \qquad \text{Formula (1)}$$

where

$$a = \frac{\alpha}{\beta} - \frac{\Delta P}{P_0} - 1 \qquad \text{Formula (2)}$$

$\alpha$ is the solubility of the gas in the solution at the temperature of the second chamber 105. The value of $\alpha$ varies depending on the composition of the solution introduced into the fluidic device 101 and the composition of the gas dissolved in the solution. As an example, $\alpha$ is a value at room temperature. As an example, $\alpha$ is the solubility of air in the solution.

$\beta$ is the solubility of the gas in the solution at the temperature of the flow path 103. That is, when the temperature of the second chamber 105 is different from the temperature of the flow path 103, there is a possibility that $\alpha \neq \beta$.

$P_0$ is the pressure in the surrounding environment of the fluidic device 101, and is the atmospheric pressure in a typical indoor environment.

$\Delta P$ is a bubble internal pressure rise value, where $\Delta P = 4\sigma/d$. $\sigma$ is the surface tension of the solution, and d is a diameter of the flow path 103. Note that d is a value assuming that the cross section of the flow path 103 is circular, but in a case where the cross section of the flow path 103 is not circular, those skilled in the art can appropriately determine the value of d according to the shape on the basis of a known technique or the like. For example, the diameter of a circular plate having the same area as the cross section of the flow path 103 may be used.

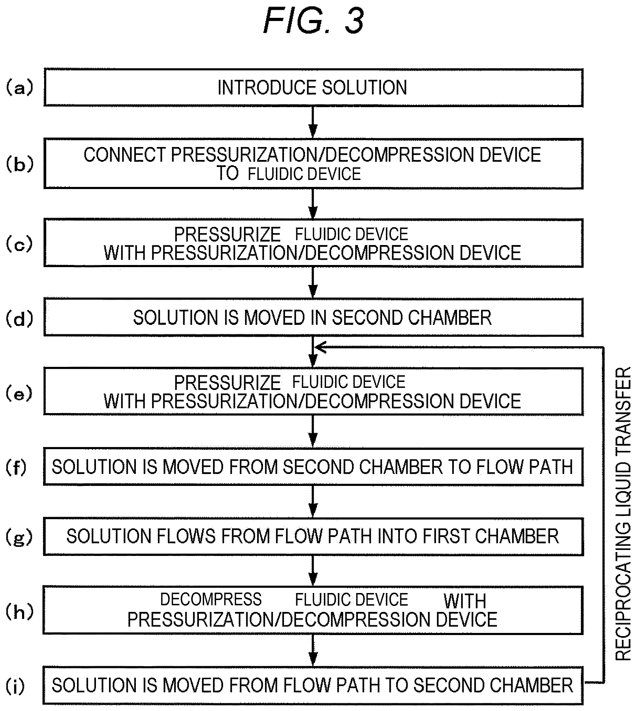

Fig. 3 illustrates an operation flow from introduction of the solution into the solution introduction portion 106 to reciprocating liquid feeding through the flow path under pressure. This operation flow represents a liquid feeding method for removing bubbles from the solution introduced into the fluidic device 101. Hereinafter, each operation step will be described with reference to Fig. 3.

First, a solution to be used for a chemical reaction in the flow path is introduced from the solution introduction portion 106 ((a) of Fig. 3). Since the space including the second chamber 105 connected to the solution introduction portion 106, the flow path 103, and the first chamber 104 is sealed except for the solution introduction portion 106, the solution remains near the solution introduction portion 106 in this step.

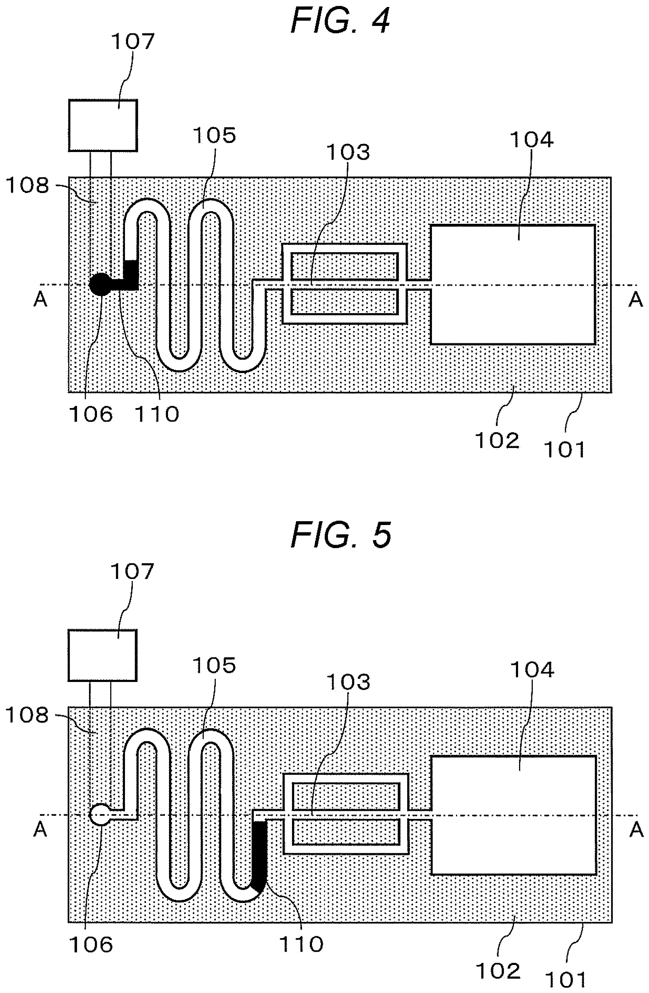

Fig. 4 illustrates the position of the solution 110 at this point. This position is defined to be a first position. That is, it can be said that the liquid feeding method according to the present embodiment includes a step (disposing step) of disposing the solution 110 at the first position opposite to the flow path 103 with respect to the second chamber 105. In one example, this first position is not included in the second chamber 105. That is, with the solution 110 in this first position, the volume $V_2$ of the second chamber 105 does not include any portion of the solution 110 or substantially does not include the solution 110.

Next, the pressurization/decompression device 107 is connected to the solution introduction portion 106 via the tube 108 ((b) of Fig. 3). Next, pressurization of the fluidic device 101 is started by the pressurization/decompression device 107 ((c) of Fig. 3). The solution moves through the second chamber 105 by pressurization, and eventually reaches immediately before the flow path 103 in the second chamber 105 ((d) of Fig. 3). As described above, the liquid feeding method according to the present embodiment includes a step (liquid feeding step) of pressurizing and feeding the solution by the pressurization/decompression device 107 connected to the second chamber 105 so that the solution moves in the second chamber 105 toward the flow path 103.

Fig. 5 illustrates the position of the solution 110 at the end of step (d). At this point, the solution is pressurized to a pressure sufficient to remove bubbles in the flow path 103 (calculations for pressure are described below).

Next, in order to introduce the solution into the flow path 103 and perform a chemical reaction, the fluidic device 101 is further pressurized by the pressurization/decompression device 107 ((e) of Fig. 3). As a result, the solution moves from the second chamber 105 to the flow path 103 and is introduced into the flow path 103 ((f) of Fig. 3). As described above, the liquid feeding method according to the present embodiment includes a step of pressure-introducing the solution from the second chamber 105 into the flow path 103 (flow path introduction step).

When the solution is introduced into the flow path 103 or after the solution is introduced into the flow path 103, bubbles may be generated in the flow path 103, but a pressure sufficient to pressurize and remove the bubbles is applied to the solution, and the bubbles generated in the flow path 103 eventually disappear.

Next, a portion or the entire amount of the solution passes through the flow path 103 and flows into the first chamber 104 ((g) of Fig. 3). Thereafter, the pressurization/decompression device 107 is switched to decompression in order to reciprocate the solution ((h) of Fig. 3). As a result, the solution moves to the second chamber 105 through the flow path 103 ((i) of Fig. 3). When a portion or the entire amount of the solution has passed through the flow path 103, one reciprocating of the solution feeding is completed. If reciprocating of the solution feeding is to be performed a plurality of times, the steps of (e) to (i) of Fig. 3 are repeated.

Note that the solution may be fed in one direction without being reciprocally fed. In this case, it is advantageous to provide the first chamber 104 with a valve for discharging the solution to the outside of the fluidic device 101. After the liquid feeding is performed up to the process of (g) in Fig. 3, the valve provided in the first chamber 104 is switched to open the first chamber 104 to the outside, and the solution is discharged to the outside of the first chamber 104, and thereby the unidirectional liquid feeding is achieved.

Next, the reason why the pressure necessary for bubble suppression can be applied to the solution during liquid feeding when Formula (1) is satisfied will be described.

When the solution moves from the room temperature or the temperature of the second chamber 105 to the flow path 103 set at a higher temperature for the chemical reaction, the solubility of the gas in the solution is decreased, and the gas expelled to the outside of the solution becomes bubbles. In the present embodiment, bubbles are suppressed by dissolving the gas in the bubbles thus generated in the solution by pressurization.

It is assumed that the gas is dissolved to a saturated concentration before the solution is introduced into the flow path 103. When the solution is introduced into the flow path 103, the solubility is decreased, and therefore the saturated concentration is also decreased. If the amount of gas exceeding the saturated concentration does not go out of the solution, the gas pressure ratio in the solution is $\alpha/\beta$. Therefore, assuming that the pressure immediately after the solution is introduced into the fluidic device 101 ((a) of Fig. 3) to be an initial pressure $P_0$, if a pressure exceeding $(\alpha/\beta) \cdot P_0$ is applied to the solution immediately before the solution is introduced into the flow path ((d) of Fig. 3), bubbles are not generated in the solution due to temperature rise.

Since such a fluidic device is generally used under atmospheric pressure, $P_0$ is atmospheric pressure. On the other hand, when the fluidic device is used in a pressure chamber for some reason, the pressure in the pressure chamber is used as $P_0$.

However, in practice, since there is an effect that the gas inside the bubble is pressurized by the surface tension of a gas-liquid interface, the pressure applied from the outside may be low by that amount. It is known that an internal pressure increase amount of the bubbles can be calculated as $\Delta P = 4\sigma/d$ where $\sigma$ is the surface tension of the solution and d is a diameter of the bubble. Therefore, the bubbles can be removed by applying a pressure of $(\alpha/\beta) \cdot P_0 - \Delta P$ to the solution. The value of d can be appropriately determined according to the size of the bubble to be removed.

Therefore, in practice, if the solution receives a pressure of $(\alpha/\beta) \cdot P_0 - \Delta P$ immediately before the solution is introduced into the flow path ((d) of Fig. 3), the pressure necessary for bubble suppression can be always applied during the solution feeding.

Note that d may be a diameter of the flow path. The bubbles are formed by growth of fine bubble nuclei. An object of the present embodiment is to suppress bubbles before the bubbles grow larger as the bubble diameter exceeds the flow path diameter, and it is assumed that the bubble diameter is equal to or smaller than the flow path diameter. The larger the bubble diameter, the smaller the internal pressure increase amount ($\Delta P$), and the larger the pressure required for bubble suppression. Therefore, the applied pressure may be defined on the assumption that the bubble diameter is equal to the flow path diameter.

Here, it is assumed that liquid feeding is performed sufficiently slowly and pressurization of the solution is an isothermal process. From Boyle's law, the pressure $P_{3d}$ applied to the solution immediately before it is introduced into the flow path 103 ((d) of Fig. 3) is as follows.

$$P_0(V_1 + v + V_2) = P_{3d}(V_1 + v)$$

$$P_{3d} = \frac{P_0(V_1 + v + V_2)}{V_1 + v}$$

When $P_{3d}$ is a value equal to or larger than $(\alpha/\beta) \cdot P_0 - \Delta P$ described above, gas release (generation of bubbles) due to temperature rise does not occur. That is, the conditional formula is $P_{3d} \geq (\alpha/\beta) \cdot P_0 - \Delta P$. By arranging the above two formulas, when

$$\frac{P_0(V_1 + v + V_2)}{V_1 + v} \geq \frac{\alpha}{\beta} P_0 - \Delta P$$

$$\frac{V_2}{V_1 + v} \geq a \qquad \text{Formula (1)}$$

$$a = \frac{\alpha}{\beta} - \frac{\Delta P}{P_0} - 1 \qquad \text{Formula (2)}$$

are satisfied, bubbles in the flow path 103 can be suppressed.

US 2007/0087353 A discloses a fluidic device including a chamber. In US 2007/0087353 A, a method for using air compressed in a chamber at the time of reciprocating liquid feeding by a chamber provided at one end of a flow path is described. However, the device disclosed in US 2007/0087353 A includes an air chamber (corresponding to the first chamber 104) connected to one side of the flow path, but does not include a chamber (corresponding to the second chamber 105) connected to the opposite end of the flow path. That is, the volume corresponding to $V_2$ is extremely small as compared with the volumes corresponding to $V_1$ and v, and the bubbles in the flow path cannot be suppressed since Formula (1) is not satisfied.

The suppression of bubbles caused by the decrease in the solubility accompanying the setting of the flow path to a higher temperature has been described above. However, the air bubble generation mode that can be suppressed is not limited thereto.

For example, when the solution is introduced into the flow path, bubbles may be generated due to generation of a portion where the solution is not filled at a corner of the flow path or the like. Even the bubbles generated in this manner can be removed by dissolving the gas in the solution by pressurization. Hereinafter, the pressure required in this case will be described.

The total volume of bubbles generated when the solution is introduced into the flow path 103 is denoted by $V_b$, and the volume of the solution is denoted by $V_s$. It is assumed that the gas is dissolved to a saturated concentration before the solution is introduced into the flow path 103.

In this case, it is necessary to dissolve the gas having the volume $V_b$ in the solution in addition to the gas $\alpha V_s$ dissolved in the solution before the solution is introduced into the flow path 103. The pressure required at that time, relative to the initial pressure $P_0$, is as follows.

$$\frac{\alpha V_s + V_b}{\alpha V_s} P_0$$

As described above, in consideration of the effect of the bubble internal pressure rise, immediately before the solution is introduced into the flow path 103 ((d) of Fig. 3), when the pressure of

$$\frac{\alpha V_s + V_b}{\alpha V_s} P_0 - \Delta P$$

is applied to the solution, bubbles can be suppressed.

In the same way as before, the pressure $P_{3d'}$ applied on the solution immediately before it was introduced into the flow path 103 ((d) of Fig. 3) is

$$P_0(V_1 + v + V_2) = P_{3d'}(V_1 + v)$$

$$P_{3d'} = \frac{P_0(V_1 + v + V_2)}{V_1 + v}$$

and the bubbles can be suppressed if the value of $P_{3d'}$ is equal to or more than the following.

$$\frac{\alpha Vs + V_b}{\alpha Vs} P_0 - \Delta P$$

That is,

$$\frac{P_0(V_1 + v + V_2)}{V_1 + v} \geq \frac{\alpha V_s + V_b}{\alpha V_s} P_0 - \Delta P$$

By arranging this, when

$$\frac{V_2}{V_1 + v} \geq b \qquad \text{Formula (3)}$$

$$b = \frac{V_b}{\alpha V_s} - \frac{\Delta P}{P_0} \qquad \text{Formula (4)}$$

are satisfied, bubbles in the flow path can be suppressed.

Here, a ratio of the volume of the bubbles to the volume of the solution is $R = V_b/V_s$. In a chemical reaction using a flow path, when $R \geq 0.05$ is satisfied, inhibition of the liquid feeding by the bubbles and reduction in efficiency of a chemical reaction become problematic. Therefore, by setting a value of $R = 0.05$ as a threshold, and designing the volumes of the flow path 103, the first chamber 104, and the second chamber 105 to satisfy

$$b = \frac{R}{\alpha} - \frac{\Delta P}{P_0} = \frac{1}{20\alpha} - \frac{\Delta P}{P_0} \qquad \text{Formula (5)}$$

the bubbles that cause the above-described problems can be removed. As described above, the present embodiment is also effective for suppressing bubbles generated at the time of solution introduction.

Second Embodiment

Hereinafter, a second embodiment according to the present invention will be described. Hereinafter, description of parts common to the first embodiment may be omitted.

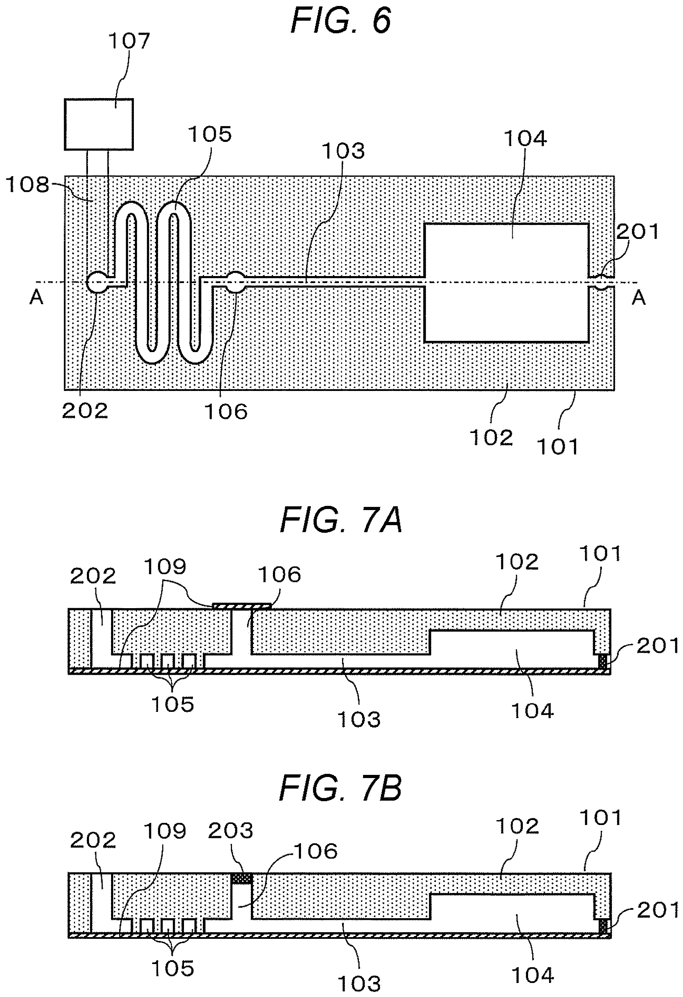

Fig. 6 illustrates a plan view of a fluidic device 101, and Fig. 7A illustrates a cross-sectional view taken along line A-A of Fig. 6. The present embodiment is different from the first embodiment in that a valve 201 that can be opened to the atmosphere is provided with respect to the configuration illustrated in Fig. 1. The valve 201 is provided on the opposite side of the first chamber 104 from the flow path 103. The present embodiment is different from the first embodiment in that the solution introduction portion 106 is provided at a connection portion between the second chamber 105 and the second side (that is, the side different from the first side to which the first chamber 104 is connected) of the flow path 103.

In the present embodiment, the solution introduction portion 106 may be a portion of the flow path 103 or a portion of the second chamber 105. That is, if the solution introduction portion 106 has a non-negligible volume, the volume can be configured to be included in the volume v of the flow path 103 or can be configured to be included in the volume $V_2$ of the second chamber 105.

Although the flow path 103 is not branched in Fig. 6, the flow path 103 may be branched as in Fig. 1. Although illustration of the probe 120 and the bead 121 is omitted, either or both of them may be included.

The valve 201 is, for example, an on-off valve. The valve 201 can be a microvalve that can be installed in the flow path as illustrated in Figs. 6 and 7. Alternatively, the valve 201 may be, for example, a direction switching valve, and a tube may be connected to the first chamber 104 and a direction switching valve may be installed on the tube.

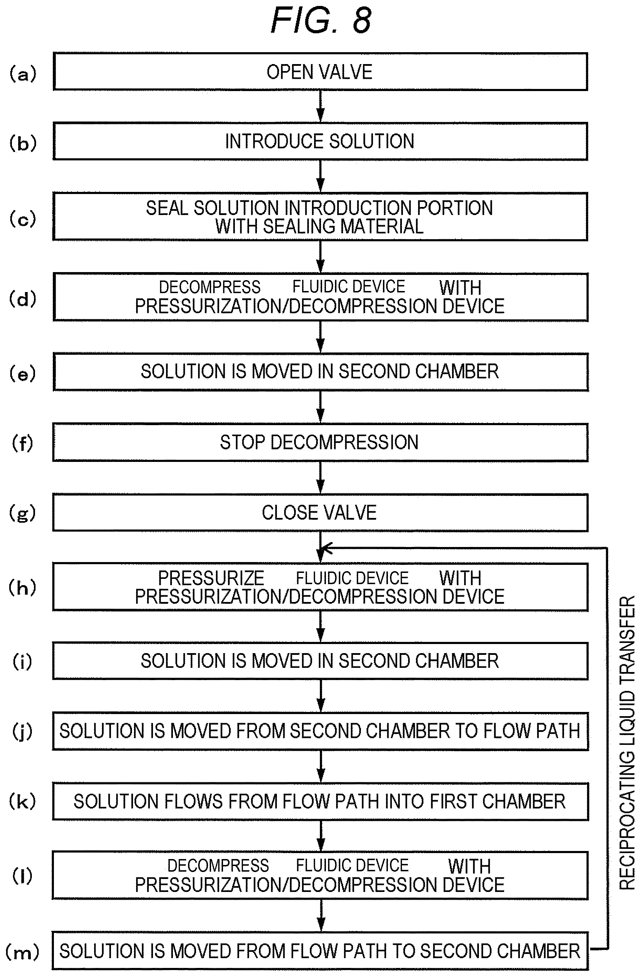

Fig. 8 illustrates an operation flow from introduction of the solution into the solution introduction portion to reciprocating liquid feeding through the flow path under pressure. Hereinafter, each operation step will be described with reference to Fig. 8.

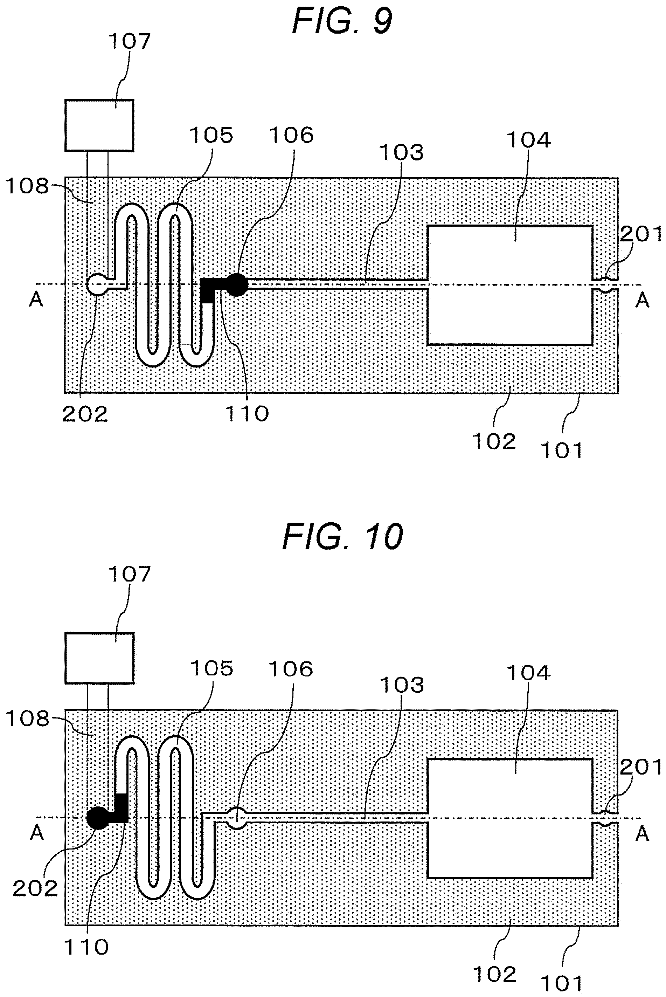

In the present embodiment, the operation is started from a state in which the valve 201 is opened to the atmosphere ((a) of Fig. 8). First, a solution to be used for a chemical reaction in the flow path 103 is introduced into the fluidic device 101 at the solution introduction portion 106 ((b) of Fig. 8). Fig. 9 illustrates the position of the solution 110 at this point.

After introduction of the solution, the opening of the solution introduction portion 106 is sealed with a sealing material 109 in order to prevent contamination of the solution ((c) of Fig. 8). By this operation, it is also possible to obtain an effect of maintaining airtightness in the fluidic device 101 when the solution is pressurized and fed later.

Next, the fluidic device 101 is decompressed by the pressurization/decompression device 107 ((d) of Fig. 8). By the decompression, the solution moves inside the second chamber 105 toward a pressurization/decompression device connection unit 202 ((e) of Fig. 8). When the entire amount or almost the entire amount of the solution eventually passes through the second chamber 105 and reaches the pressurization/decompression device connection unit 202, the decompression is stopped ((f) of Fig. 8). Fig. 10 schematically illustrates the position of the solution 110 at this point.

In Figs. 9 and 10, the flow path 103 is not branched as in Fig. 6, but the flow path 103 may be branched as in Fig. 1. Although illustration of the probe 120 and the bead 121 is omitted, either or both of them may be included.

At the time of (f) in Fig. 8, the valve 201 is opened, so that the pressures inside the flow path 103, the first chamber 104, the second chamber 105, and the solution introduction portion 106 are maintained to be the same as the pressure of the surrounding environment (for example, atmospheric pressure).

The position of the solution 110 illustrated in Fig. 10 is the first position similar to the position of the solution 110 illustrated in Fig. 4. As described above, it can be said that the liquid feeding method according to the present embodiment includes a step of moving the solution from the solution introduction portion 106 toward the first position in a state where the valve 201 is opened, and a step (disposing step) of disposing the solution 110 at the first position opposite to the flow path 103 with respect to the second chamber 105, after the step of moving.

Next, the valve 201 is closed to ensure airtightness of the fluidic device 101 ((g) of Fig. 8). Thereafter, pressurization of the fluidic device 101 is started by the pressurization/decompression device 107 ((h) of Fig. 8). The solution moves through the second chamber 105 by pressurization, and eventually reaches immediately before the flow path 103 in the second chamber 105 ((i) of Fig. 8). At this time, the solution is pressurized to a pressure sufficient to remove bubbles in the flow path 103.

Next, in order to introduce the solution into the flow path 103 and perform a chemical reaction, the fluidic device 101 is further pressurized by the pressurization/decompression device 107. As a result, the solution moves from the second chamber 105 to the flow path 103 and is introduced into the flow path 103 ((j) of Fig. 8).

When the solution is introduced into the flow path 103 or after the solution is introduced into the flow path 103, bubbles may be generated in the flow path 103, but a pressure sufficient to pressurize and remove the bubbles is applied to the solution, and the bubbles generated in the flow path 103 eventually disappear.

Next, a portion or the entire amount of the solution passes through the flow path 103 and flows into the first chamber 104 ((k) of Fig. 8). Thereafter, the pressurization/decompression device 107 is switched to decompression in order to reciprocate the solution ((1) of Fig. 8). As a result, the solution moves to the second chamber 105 through the flow path 103 ((m) of Fig. 8). When a portion or the entire amount of the solution has passed through the flow path 103, one reciprocating of the solution feeding is completed. If reciprocating of the solution feeding is to be performed a plurality of times, the steps of (h) to (m) of Fig. 8 are repeated.

As described in the first embodiment, liquid feeding may be performed in one direction instead of reciprocating. In the case of the liquid feeding in one direction, the valve 201 may be opened to discharge the solution to the outside of the first chamber 104.

As described above, also in the second embodiment, the generation of bubbles can be suppressed as in the first embodiment. In addition, the degree of freedom of the position where the solution introduction portion 106 is provided is further increased.

Fig. 7B illustrates a cross-sectional view of a fluidic device 101 according to a modification of the second embodiment. Fig. 7B is a cross-sectional view corresponding to Fig. 7A. In the present modification, the fluidic device 101 includes a valve 203 at the solution introduction portion 106.

Instead of the operation of (c) in Fig. 8, that is, the operation of sealing the opening of the solution introduction portion 106 with the sealing material 109, the operation of closing the opening of the solution introduction portion 106 with the valve 203 is performed. In this way, the solution introduction portion 106 can be opened and closed a plurality of times, and the degree of freedom of operation is increased.

Third Embodiment

Hereinafter, a third embodiment according to the present invention will be described. The present embodiment relates to a fluidic device for performing PCR. Hereinafter, description of parts common to the first embodiment or second embodiment may be omitted.

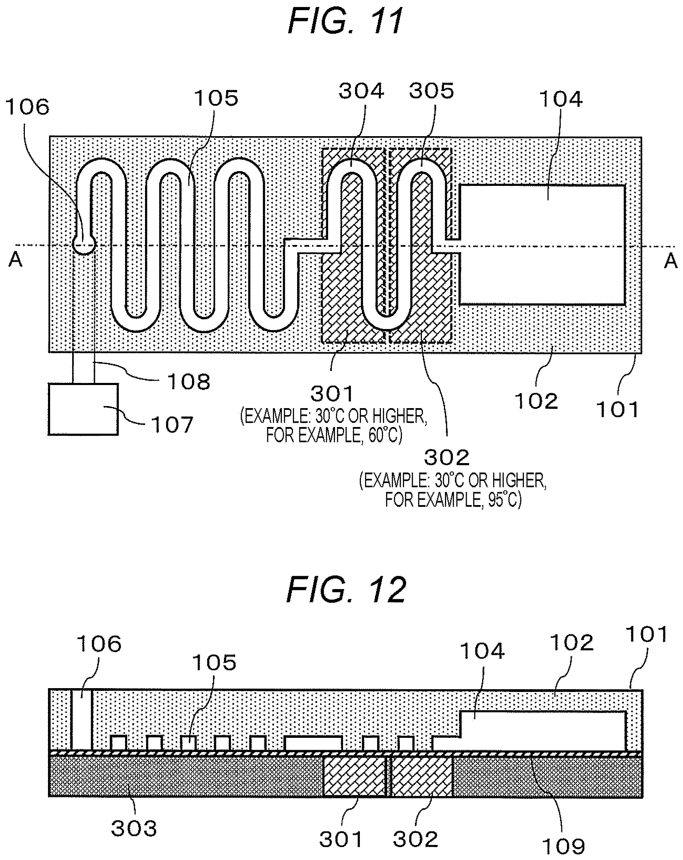

Fig. 11 illustrates a plan view of a fluidic device 101, and Fig. 12 illustrates a cross-sectional view taken along line A-A of Fig. 11. The fluidic device 101 includes a substrate 102, a sealing material 109, a first external heat source 301, a second external heat source 302, and a device holding unit 303. A thermocouple and a heater are built in each of the first external heat source 301 and the second external heat source 302, and they function as a temperature control mechanisms that form temperature zones used for PCR. The device holding unit 303 is desirably made of a material having heat resistance and low thermal conductivity. For example, polyether ether ketone (PEEK) or polycarbonate (PC) is suitable.

Also in Fig. 11, the flow path is not branched as in Fig. 6 or the like, but the flow path may be branched as in Fig. 1. Although illustration of the probe 120 and the bead 121 is omitted, either or both of them may be included.

In the present embodiment, the flow path includes a plurality of temperature regions, and is divided into, for example, a first temperature region 304 and a second temperature region 305. The first temperature region 304 is heated to a first temperature in contact with the first external heat source 301, and the second temperature region 305 is heated to a second temperature (which may be a temperature different from the first temperature) in contact with the second external heat source 302.

As described above, the fluidic device 101 according to the present embodiment includes the first external heat source 301 and the second external heat source 302 as heating mechanisms for heating the flow path.

In the present embodiment, in order to speed up PCR, a system called two-step PCR in which PCR is performed by repeating denaturation, annealing, and extension in two temperature regions was adopted. The target temperature of the first temperature region 304 was set to an annealing and extension temperature zone (for example, 60°C), and the target temperature of the second temperature region 305 was set to a denaturation temperature zone (for example, 95°C). The first temperature region 304 may be a denaturation temperature zone, and the second temperature region 305 may be an annealing and extension temperature zone.

Examples of the solution used in the present embodiment include a mixture containing one or two or more types of DNAs to be amplified, mixed with one or more types of primers, a heat-resistant enzyme, and four types of deoxyribonucleoside triphosphates (dATP, dCTP, dGTP, dTTP).

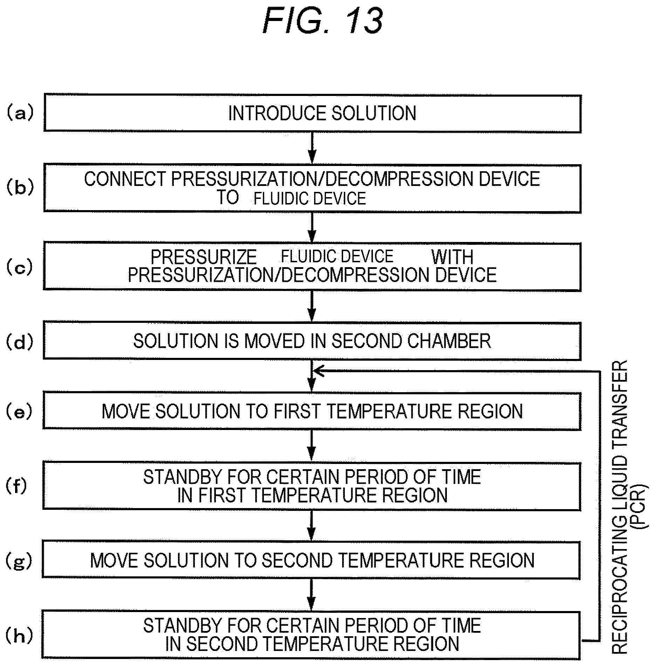

Fig. 13 illustrates an operation flow from introduction of the solution into the solution introduction portion 106 to reciprocating liquid feeding in the flow path under pressure. The procedure from the solution introduction until the solution passes through the second chamber and moves to the front of the flow path ((a) to (d) in Fig. 13) is the same as that in the first embodiment ((a) to (d) in Fig. 3).

Thereafter, the fluidic device 101 is pressurized by the pressurization/decompression device 107, and the solution is moved to the first temperature region 304 ((e) in Fig. 13). The solution is made to stand by in the first temperature region 304 for a certain period of time, and thereby annealing and extension reactions are performed ((f) in Fig. 13). Subsequently, the fluidic device 101 is decompressed by the pressurization/decompression device 107, and the solution is moved to the second temperature region 305 ((g) in Fig. 13). The solution is made to stand by in the second temperature region 305 for a certain period of time, and thereby denaturation reactions are performed ((h) in Fig. 13). By repeating the steps of (e) to (h) in Fig. 13 a predetermined number of times, target DNA is amplified.

As described above, since the fluidic device according to the third embodiment includes the heating mechanisms, it is possible to suppress generation of bubbles also in PCR as in the first embodiment.

As a modification of the third embodiment, a single heating mechanism may be used, and the heating temperature may be another temperature. In particular, if the heating mechanism heats the flow path or at least a portion thereof to 30°C or higher, there is a possibility that the heating mechanism can be applied to a chemical reaction that substantially requires heating.

Fourth Embodiment

Hereinafter, a fourth embodiment according to the present invention will be described. The present embodiment relates to a liquid feeder capable of installing the fluidic device of any one of the first to third embodiments and the modifications thereof.

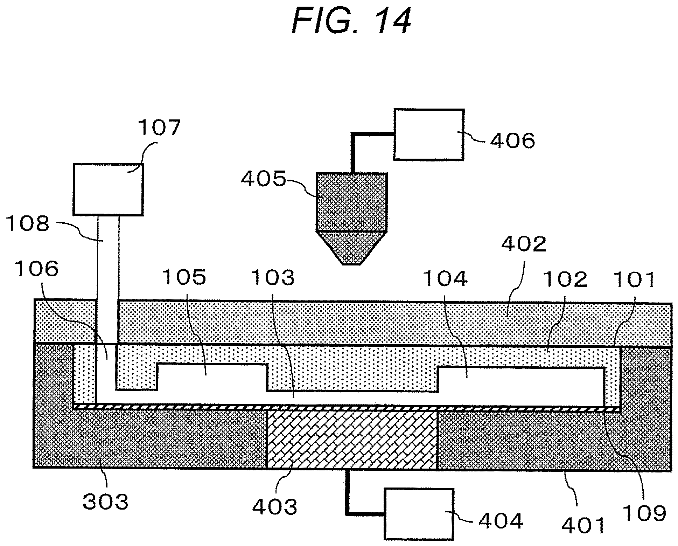

As an example of the present embodiment, a liquid feeder 401 installed with a fluidic device 101 illustrated in Fig. 1 is illustrated in Fig. 14. The liquid feeder 401 can be used to feed a solution in the fluidic device. The fluidic device 101 and the liquid feeder 401 constitute a liquid feeder set.

The liquid feeder 401 can be used in association with the fluidic device 101. The liquid feeder 401 includes a pressurization/decompression device 107, a device holding unit 303, a cover 402, an external heat source 403, a temperature control unit 404, a sensor 405, and a signal detection unit 406.

The pressurization/decompression device 107 is an example of a pressurizing unit, and is connected to the solution introduction portion 106 via the tube 108. The pressurization/decompression device 107 applies pressure via the solution introduction portion 106 to feed the solution. By using the pressurization/decompression device 107, it is possible to suppress bubbles as described in the first to fourth embodiments.

The cover 402 has a role of fixing the fluidic device 101 installed in the device holding unit 303 at a predetermined position. As a material of the cover 402, it is desirable to use a material having heat resistance and low thermal conductivity, and for example, polycarbonate (PC) can be used.

The external heat source 403 is an example of a heating mechanism. A thermocouple and a heater are built in the external heat source 403, and it is maintained at a desired temperature by the temperature control unit 404.

The sensor 405 obtains information to observe the flow path during the chemical reaction. The signal obtained by the sensor 405 is transmitted to the signal detection unit 406. As the sensor 405, at least one of a pressure sensor, a liquid level detection sensor, or a bubble detection sensor can be used. For example, the pressurization and decompression by the pressurization/decompression device 107 can be more appropriately controlled by using a pressure sensor, the position of the solution can be more appropriately controlled by using a liquid level detection sensor, and the presence or absence of the bubbles in the flow path can be confirmed by using a bubble detection sensor.

As described above, according to the liquid feeder of the fourth embodiment, the solution can be more appropriately fed in the fluidic device.

Fifth Embodiment

The present embodiment is an experimental embodiment according to the first embodiment, and is an experimental embodiment in which Formula (1) regarding the chamber volume ratio in the fluidic device necessary for bubble suppression is examined.

<Experiment>

At the center of a 10 mm $\times$ 40 mm $\times$ 2 mm thick COP substrate, a groove having a width of 0.12 mm $\times$ a depth of 0.12 mm $\times$ a length of 10 mm was produced by cutting. A first chamber of a flow path type having a volume $V_1$ was connected to one end of the flow path, and a second chamber of a flow path type having a volume $V_2$ was connected to the other end. The groove was filled with 10 beads having a diameter of 100 $\mu$m, and a PO sealing material having a thickness of 0.1 mm was press-bonded to form a flow path (volume v = 0.14 mm$^3$).

The volume $V_1$ of the first chamber and the volume $V_2$ of the second chamber were changed to prepare a plurality of fluidic devices having different values of the chamber volume ratio $V_2/(V_1 + v)$.

Considering general hybridization conditions, the fluidic device was installed on a heater so that the flow path was heated to 60°C, and fixed with a cover made of PC. 25 $\mu$L of a 4 $\times$ SSC - 0.1% SDS solution, which is a general hybridization solution, was introduced onto the side opposite to the side connected to the flow path of the second chamber. A syringe pump was connected to the second chamber via a tube.

The fluidic device was pressurized by a syringe pump and fed so that the solution was introduced into the flow path through the second chamber. Whether or not the bubbles were present in the flow path during liquid feeding was confirmed with a digital microscope, and the air bubble occurrence probability at a chamber volume ratio of each fluidic device was obtained.

<Result>

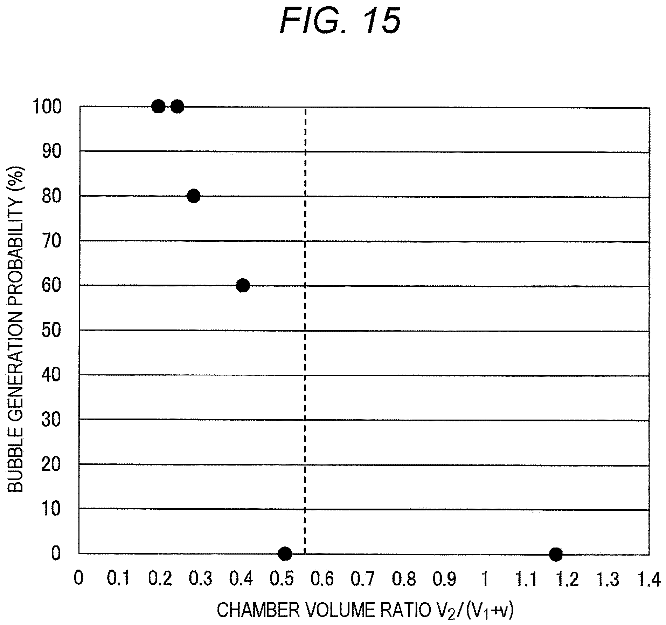

Fig. 15 illustrates a relationship between a chamber volume ratio and a bubble occurrence probability. The bubbles were generated when the chamber volume ratio $V_2/(V_1 + v)$ was about 0.4 or less, and the bubbles were suppressed when the chamber volume ratio $V_2/(V_1 + v)$ exceeded about 0.5.

Next, validity of the experimental result illustrated in Fig. 15 will be described. In the present embodiment, the solution was heated from room temperature (assumed to be 20°C) to 60°C which is the set temperature of the flow path. The solubility of air in water is $\alpha$ = 0.019 cm$^3$/cm$^3$ at 20°C and $\beta$ = 0.012 cm$^3$/cm$^3$ at 60°C. The surface tension $\sigma$ of water is 72.8 mN/m, and assuming that the bubble diameter d is equal to the flow path diameter for the reason described in the first embodiment, d = 100 $\mu$m. When substituting these values into Formulas (1) and (2),

$$\frac{V_2}{V_1 + v} \geq a = \frac{\alpha}{\beta} - \frac{\Delta P}{P_0} - 1 = 0.55$$

is satisfied (the rough position of the value of a is indicated by a broken line in Fig. 15). Therefore, the experimental results illustrated in Fig. 15 are appropriate, and it can be seen that bubbles in the flow path can be suppressed by the conditions of the chamber volume ratio shown in Formulas (1) and (2).

The fifth embodiment is an experimental embodiment according to the first embodiment, but it is considered that similar experimental results can be obtained for the second to fourth embodiments.

### Claims

1. A liquid feeding method for removing bubbles from a solution (110) introduced into a fluidic device (101), wherein the fluidic device (101) includes:

   a flow path (103) of a volume v;
   a first chamber (104) having a volume $V_1$ and connected to a first side of the flow path (103); and
   a second chamber (105) having a volume $V_2$ and connected to a second side, being different from the first side, of the flow path (103),
   $V_1$, $V_2$, and v satisfy

   $$\frac{V_2}{V_1 + v} \geq a \qquad \text{Formula (1)}$$

   where

   $$a = \frac{\alpha}{\beta} - \frac{\Delta P}{P_0} - 1 \qquad \text{Formula (2)}$$

   $\alpha$ is a solubility of gas in the solution (110) at a temperature of the second chamber (105),
   $\beta$ is a solubility of the gas in the solution (110) at a temperature of the flow path (103),
   $P_0$ is a pressure of a surrounding environment of the fluidic device (101),
   $\Delta P$ is a bubble internal pressure rise value, where $\Delta P = 4\sigma/d$, $\sigma$ is a surface tension of the solution (110), and d is a diameter of the flow path (103), wherein the temperature of the flow path (103) is set higher than the temperature of the second chamber (105),
   the liquid feeding method comprising:

   disposing the solution (110) at a first position opposite to the flow path (103) with respect to the second chamber (105);
   pressurizing and feeding the solution (110) so that the solution (110) is transferred through the second chamber (105) toward the flow path (103); and
   pressurizing and introducing the solution (110) from the second chamber (105) into the flow path (103), wherein the solution is introduced into the fluidic device (101) through a solution introduction portion (106), and the solution introduction portion (106) is provided at a connection portion between the second chamber (105) and the second side of the flow path (103), wherein
   the fluidic device (101) includes:

   a solution introduction portion (106) provided at a connection portion between the second chamber (105) and the second side of the flow path (103);
   a valve (203) for opening and closing the solution introduction portion (106); and
   a valve (201) provided on a side opposite to the flow path (103) with respect to the first chamber (104), and
   the liquid feeding method further comprising, before the disposing:

   introducing the solution (110) into the fluidic device (101) at the solution introduction portion (106);
   closing the introduction portion (106); and
   moving the solution (110) from the solution introduction portion (106) toward the first position in a state where the valve (201) is opened.

2. The liquid feeding method according to claim 1, wherein

$V_1$, $V_2$, and v satisfy

$$\frac{V_2}{V_1+v} \geq b \qquad \text{Formula (3)}$$

where

$$b = \frac{1}{20\alpha} - \frac{\Delta P}{P_0} \qquad \text{Formula (5)}.$$

3. A fluidic device (101) for introducing and pressurizing a solution (110), comprising:
a flow path (103) of a volume v;

a first chamber (104) having a volume $V_1$ and connected to a first side of the flow path (103); and
a second chamber (105) having a volume $V_2$ and connected to a second side, being different from the first side, of the flow path (103), wherein
$V_1$, $V_2$, and v satisfy

$$\frac{V_2}{V_1+v} \geq a \qquad \text{Formula (1)}$$

where

$$a = \frac{\alpha}{\beta} - \frac{\Delta P}{P_0} - 1 \qquad \text{Formula (2)}$$

$\alpha$ is a solubility of gas in the solution (110) at a temperature of the second chamber (105),
$\beta$ is a solubility of the gas in the solution (110) at a temperature of the flow path (103),
$P_0$ is a pressure of a surrounding environment of the fluidic device (101),
$\Delta P$ is a bubble internal pressure rise value, where $\Delta P = 4\sigma/d$, $\sigma$ is a surface tension of the solution (110), and d is a diameter of the flow path (103), further comprising a solution introduction portion (106) provided on a side opposite to the flow path (103) with respect to the second chamber (105), further comprising a liquid feeder (401) for feeding the solution (110) in the fluidic device (101), the liquid feeder (401) comprising a pressurizing unit (107) connected to the solution introduction portion (106), wherein
the pressurizing unit (107) applies a pressure via the solution introduction portion (106) to feed the solution (110), **characterized in that** further comprising
a heating mechanism (301, 302) for heating the flow path (103);
a valve (201) provided on a side opposite to the flow path (103) with respect to the first chamber (104);
a valve (203) for opening and closing the solution introduction portion (106);
the solution introduction portion (106) is provided at a connection portion between the second chamber (105) and the second side of the flow path (103).

4. The fluidic device (101) according to claim 1, wherein the heating mechanism is configured to heat the flow path (103) to 30°C or higher.

**Patentansprüche**

1. Verfahren zum Zuführen von Flüssigkeit zur Entfernung von Blasen aus einer Lösung (110), die in eine Fluidvorrichtung (101) eingeleitet wird, wobei
die Fluidvorrichtung (101) Folgendes enthält:

einen Strömungspfad (103) mit einem Volumen v;
eine erste Kammer (104), die ein Volumen $V_1$ aufweist und mit einer ersten Seite des Strömungspfads (103) verbunden ist; und
eine zweite Kammer (105), die ein Volumen $V_2$ aufweist und mit einer von der ersten Seite verschiedenen zweiten Seite des Strömungspfads (103) verbunden ist,

$V_1$, $V_2$, und v folgender Formel genügen: $\frac{V_2}{V_1+v} \geq a$    Formel (1),

wobei

$$a = \frac{\alpha}{\beta} - \frac{\Delta P}{P_0} - 1$$    Formel (2)

$\alpha$ die Löslichkeit eines Gases in der Lösung (110) bei einer Temperatur der zweiten Kammer (105) ist,
$\beta$ die Löslichkeit des Gases in der Lösung (110) bei einer Temperatur des Strömungspfads (103) ist,
$P_0$ der Druck einer Umgebung der Fluidvorrichtung (101) ist,
$\Delta P$ der Wert für den Anstieg des internen Drucks in der Blase ist, wobei $\Delta P = 4\sigma/d$, $\sigma$ die Oberflächenspannung der Lösung (110) ist und d der Durchmesser des Strömungspfads (103) ist, wobei die Temperatur des Strömungspfads (103) höher eingestellt ist als die Temperatur der zweiten Kammer (105),
das Flüssigkeitszuführverfahren Folgendes umfasst:

Anordnen der Lösung (110) an einer ersten Position gegenüber dem Strömungspfad (103) bezüglich der zweiten Kammer (105);
Druckbeaufschlagenen und Zuführen der Lösung (110) derart, dass die Lösung (110) durch die zweite Kammer (105) zu dem Strömungspfad (103) geleitet wird; und
Druckbeaufschlagenen und Einleiten der Lösung (110) von der zweiten Kammer (105) in den Strömungspfad (103), wobei die Lösung durch einen Lösungseinleitungsabschnitt (106) in die Fluidvorrichtung (101) eingeleitet wird und der Lösungseinleitungsabschnitt (106) an einem Verbindungsabschnitt zwischen der zweiten Kammer (105) und der zweiten Seite des Strömungspfads (103) vorgesehen ist, wobei die Fluidvorrichtung (101) Folgendes enthält:

einen Lösungseinleitungsabschnitt (106), der an einem Verbindungsabschnitt zwischen der zweiten Kammer (105) und der zweiten Seite des Strömungspfads (103) vorgesehen ist;
ein Ventil (203) zum Öffnen und Schließen des Lösungseinleitungsabschnitts (106); und
ein Ventil (201), das an einer Seite gegenüber des Strömungspfads (103) bezüglich der ersten Kammer (104) vorgesehen ist, und
das Flüssigkeitszuführverfahren vor dem Anordnen ferner Folgendes umfasst:

Einleiten der Lösung (110) in die Fluidvorrichtung (101) an dem Lösungseinleitungsabschnitt (106);
Schließen des Lösungseinleitungsabschnitts (106); und
Bewegen der Lösung (110) von dem Lösungseinleitungsabschnitt (106) zu der ersten Position in einem Zustand, in dem das Ventil (201) geöffnet ist.

2. Flüssigkeitszuführverfahren nach Anspruch 1, wobei

$V_1$, $V_2$, und v folgender Formel genügen: $\frac{V_2}{V_1+v} \geq b$    Formel (3),

wobei

$$b = \frac{1}{20\alpha} - \frac{\Delta P}{P_0}$$    Formel (5).

3. Fluidvorrichtung (101) zum Einleiten und Druckbeaufschlagenen einer Lösung (110), die Folgendes umfasst:

einen Strömungspfad (103) mit einem Volumen v;
eine erste Kammer (104), die ein Volumen $V_1$ aufweist und mit einer ersten Seite des Strömungspfads (103) verbunden ist; und
eine zweite Kammer (105), die ein Volumen $V_2$ aufweist und mit einer von der ersten Seite verschiedenen zweiten Seite des Strömungspfads (103) verbunden ist, wobei

$V_1$, $V_2$, und v folgender Formel genügen: $\frac{V_2}{V_1+v} \geq a$ $\hspace{2cm}$ Formel (1),

wobei

$$a = \frac{\alpha}{\beta} - \frac{\Delta P}{P_0} - 1 \hspace{3cm} \text{Formel (2),}$$

$\alpha$ die Löslichkeit eines Gases in der Lösung (110) bei einer Temperatur der zweiten Kammer (105) ist,
$\beta$ die Löslichkeit des Gases in der Lösung (110) bei einer Temperatur des Strömungspfads (103) ist,
$P_0$ der Druck einer Umgebung der Fluidvorrichtung (101) ist,
$\Delta P$ der Wert für den Anstieg des internen Drucks in der Blase ist, wobei $\Delta P=4\sigma/d$, $\sigma$ die Oberflächenspannung der Lösung (110) ist und d der Durchmesser des Strömungspfads (103) ist,
wobei die Fluidvorrichtung (101) ferner einen Lösungseinleitungsabschnitt (106) umfasst, der auf einer Seite gegenüber dem Strömungspfad (103) bezüglich der zweiten Kammer (105) vorgesehen ist, und ferner eine Flüssigkeitszuführvorrichtung (401) zum Zuführen der Lösung (110) in die Fluidvorrichtung (101) umfasst, wobei die Flüssigkeitszuführvorrichtung (401) eine Druckbeaufschlagungseinheit (107) umfasst, die mit dem Lösungseinleitungsabschnitt (106) verbunden ist, wobei
die Druckbeaufschlagungseinheit (107) über den Lösungseinleitungsabschnitt (106) einen Druck ausübt, um die Lösung (110) zu zuführen,
**dadurch gekennzeichnet, dass** sie ferner Folgendes umfasst:

einen Heizmechanismus (301, 302) zum Erhitzen des Strömungspfads (103);
ein Ventil (201), das an einer Seite gegenüber dem Strömungspfad (103) bezüglich der ersten Kammer (104) vorgesehen ist;
ein Ventil (203) zum Öffnen und Schließen des Lösungseinleitungsabschnitts (106);
wobei der Lösungseinleitungsabschnitt (106) an einem Verbindungsabschnitt zwischen der zweiten Kammer (105) und der zweiten Seite des Strömungspfads (103) vorgesehen ist.

4. Fluidvorrichtung nach Anspruch 1, wobei der Heizmechanismus konfiguriert ist, den Strömungspfad (103) auf 30 °C oder mehr zu erhitzen.

**Revendications**

1. Procédé d'alimentation de liquide destiné à éliminer des bulles d'une solution (110) introduite jusque dans un dispositif fluidique (101), dans lequel
le dispositif fluidique (101) inclut :

un trajet d'écoulement (103) d'un volume v ;
une première chambre (104) ayant un volume $V_1$ et connectée à un premier côté du trajet d'écoulement (103) ; et
une seconde chambre (105) ayant un volume $V_2$ et connectée à un second côté, qui est différent du premier côté, du trajet d'écoulement (103),
$V_1$, $V_2$, et v satisfaisant à

$$\frac{V_2}{V_1+v} \geq a \hspace{1cm} \text{Formule (1)}$$

où

$$a = \frac{\alpha}{\beta} - \frac{\Delta P}{P_0} - 1 \hspace{1cm} \text{Formule (2)}$$

$\alpha$ étant une solubilité de gaz dans la solution (110) à une température de la seconde chambre (105),
$\beta$ étant une solubilité du gaz dans la solution (110) à une température du trajet d'écoulement (103),
$P_0$ étant une pression d'un environnement aux alentours du dispositif fluidique (101),
$\Delta P$ étant une valeur d'augmentation de pression interne de bulle, où $\Delta P = 4\sigma/d$, $\sigma$ étant une tension superficielle de la solution (110), et d étant un diamètre du trajet d'écoulement (103), la température du trajet d'écoulement (103) étant fixée comme étant plus élevée que la température de la seconde chambre (105),
le procédé d'alimentation de liquide comprenant les étapes consistant à :

disposer la solution (110) à une première position opposée au trajet d'écoulement (103) par rapport à la seconde chambre (105) ;
pressuriser et alimenter la solution (110) de telle sorte que la solution (110) est transférée à travers la seconde chambre (105) vers le trajet d'écoulement (103) ; et
pressuriser et introduire la solution (110) depuis la seconde chambre (105) jusque dans le trajet d'écoulement (103), la solution étant introduite jusque dans le dispositif fluidique (101) à travers une portion d'introduction de solution (106), et la portion d'introduction de solution (106) étant prévue au niveau d'une portion de connexion entre la seconde chambre (105) et le second côté du trajet d'écoulement (103), dans lequel
le dispositif fluidique (101) inclut :

une portion d'introduction de solution (106) prévue au niveau d'une portion de connexion entre la seconde chambre (105) et le second côté du trajet d'écoulement (103) ;
une vanne (203) destinée à ouvrir et à fermer la portion d'introduction de solution (106) ; et
une vanne (201) prévue sur un côté opposé au trajet d'écoulement (103) par rapport à la première chambre (104), et
le procédé d'alimentation de liquide comprenant en outre, avant l'étape de disposition, les étapes consistant à :

introduire la solution (110) jusque dans le dispositif fluidique (101) au niveau de la portion d'introduction de solution (106) ;
fermer la portion d'introduction (106) ; et
déplacer la solution (110) depuis la portion d'introduction de solution (106) vers la première position dans un état dans lequel la vanne (201) est ouverte.

2. Procédé d'alimentation de liquide selon la revendication 1, dans lequel

$V_1$, $V_2$, et v satisfont à

$$\frac{V_2}{V_1 + v} \geq b \quad \text{Formule (3)}$$

où

$$b = \frac{1}{20\alpha} - \frac{\Delta P}{P_0} \quad \text{Formule (5).}$$

3. Dispositif fluidique (101) destiné à introduire et à pressuriser une solution (110), comprenant :

un trajet d'écoulement (103) d'un volume v ;
une première chambre (104) ayant un volume $V_1$ et connectée à un premier côté du trajet d'écoulement (103) ; et
une seconde chambre (105) ayant un volume $V_2$ et connectée à un autre côté, qui est différent du premier côté, du trajet d'écoulement (103), dans lequel
$V_1$, $V_2$, et v satisfont à

$$\frac{V_2}{V_1 + v} \geq a \quad \text{Formule (1)}$$

où

$$a = \frac{\alpha}{\beta} - \frac{\Delta P}{P_0} - 1 \quad \text{Formule (2)}$$

$\alpha$ étant une solubilité de gaz dans la solution (110) à une température de la seconde chambre (105),

$\beta$ étant une solubilité du gaz dans la solution (110) à une température du trajet d'écoulement (103),

$P_0$ étant une pression d'un environnement aux alentours du dispositif fluidique (101),

$\Delta P$ étant une valeur d'augmentation de pression interne de bulle, où $\Delta P = 4\sigma/d$, $\sigma$ est une tension superficielle de la solution (110), et d est un diamètre du trajet d'écoulement (103), comprenant en outre une portion d'introduction de solution (106) prévue sur un côté opposé au trajet d'écoulement (103) par rapport à la seconde chambre (105), comprenant en outre un alimentateur de liquide (401) destiné à alimenter la solution (110) jusque dans le dispositif fluidique (101), l'alimentateur de liquide (401) comprenant une unité de pressurisation (107) connectée à la portion d'introduction de solution (106), dans lequel

l'unité de pressurisation (107) applique une pression via la portion d'introduction de solution (106) pour alimenter la solution (110),

**caractérisé en ce qu'**il comprend en outre

un mécanisme de chauffe (301, 302) destiné à chauffer le trajet d'écoulement (103) ;

une vanne (201) prévue sur un côté opposé au trajet d'écoulement (103) par rapport à la première chambre (104) ;

une vanne (203) destinée à ouvrir et à fermer la portion d'introduction de solution (106) ;

la portion d'introduction de solution (106) étant prévue au niveau d'une portion de connexion entre la seconde chambre (105) et le second côté du trajet d'écoulement (103).

4.  Dispositif fluidique (101) selon la revendication 1, dans lequel le mécanisme de chauffe est configuré pour chauffer le trajet d'écoulement (103) jusqu'à 30°C ou plus.

## FIG. 1

## FIG. 2

# FIG. 3

(a) | INTRODUCE SOLUTION

(b) | CONNECT PRESSURIZATION/DECOMPRESSION DEVICE TO FLUIDIC DEVICE

(c) | PRESSURIZE FLUIDIC DEVICE WITH PRESSURIZATION/DECOMPRESSION DEVICE

(d) | SOLUTION IS MOVED IN SECOND CHAMBER

(e) | PRESSURIZE FLUIDIC DEVICE WITH PRESSURIZATION/DECOMPRESSION DEVICE

(f) | SOLUTION IS MOVED FROM SECOND CHAMBER TO FLOW PATH

(g) | SOLUTION FLOWS FROM FLOW PATH INTO FIRST CHAMBER

(h) | DECOMPRESS FLUIDIC DEVICE WITH PRESSURIZATION/DECOMPRESSION DEVICE

(i) | SOLUTION IS MOVED FROM FLOW PATH TO SECOND CHAMBER

RECIPROCATING LIQUID TRANSFER

# FIG. 4

# FIG. 5

## FIG. 6

## FIG. 7A

## FIG. 7B

# FIG. 8

(a) | OPEN VALVE

(b) | INTRODUCE SOLUTION

(c) | SEAL SOLUTION INTRODUCTION PORTION WITH SEALING MATERIAL

(d) | DECOMPRESS    FLUIDIC DEVICE    WITH PRESSURIZATION/DECOMPRESSION DEVICE

(e) | SOLUTION IS MOVED IN SECOND CHAMBER

(f) | STOP DECOMPRESSION

(g) | CLOSE VALVE

(h) | PRESSURIZE    FLUIDIC DEVICE    WITH PRESSURIZATION/DECOMPRESSION DEVICE

(i) | SOLUTION IS MOVED IN SECOND CHAMBER

(j) | SOLUTION IS MOVED FROM SECOND CHAMBER TO FLOW PATH

(k) | SOLUTION FLOWS FROM FLOW PATH INTO FIRST CHAMBER

(l) | DECOMPRESS    FLUIDIC DEVICE    WITH PRESSURIZATION/DECOMPRESSION DEVICE

(m) | SOLUTION IS MOVED FROM FLOW PATH TO SECOND CHAMBER

RECIPROCATING LIQUID TRANSFER

## FIG. 9

## FIG. 10

## FIG. 11

106    105    304  305    104

108

301
(EXAMPLE: 30°C OR HIGHER,
FOR EXAMPLE, 60°C)

302
(EXAMPLE: 30°C OR HIGHER,
FOR EXAMPLE, 95°C)

107    102  101

## FIG. 12

106    105    104  102  101

303    301  302    109

# FIG. 13

(a) | INTRODUCE SOLUTION

(b) | CONNECT PRESSURIZATION/DECOMPRESSION DEVICE TO FLUIDIC DEVICE

(c) | PRESSURIZE FLUIDIC DEVICE WITH PRESSURIZATION/DECOMPRESSION DEVICE

(d) | SOLUTION IS MOVED IN SECOND CHAMBER

(e) | MOVE SOLUTION TO FIRST TEMPERATURE REGION

(f) | STANDBY FOR CERTAIN PERIOD OF TIME IN FIRST TEMPERATURE REGION

(g) | MOVE SOLUTION TO SECOND TEMPERATURE REGION

(h) | STANDBY FOR CERTAIN PERIOD OF TIME IN SECOND TEMPERATURE REGION

RECIPROCATING LIQUID TRANSFER (PCR)

# FIG. 14

# FIG. 15

**EP 4 302 855 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022110413 A
- JP 2007085998 A
- US 2016193603 A1
- US 2019224590 A1
- US 20170002399 A1
- US 20070087353 A